# EUROPEAN PATENT APPLICATION

(11) **EP 2 490 129 A1**
(43) Date of publication of application: **22.08.2012**
(21) Application number: 10824491.4
(22) Date of filing: 15.10.2010
(51) Int. Cl.: G06F 15/163, G06F 15/80

(54) **SYSTEM FOR PROCESSING DATA AND COMPUTATION DEVICE**

(30) Priority: 16.10.2009 ES 200902000
(71) Applicant: Starlab Barcelona, SL, 08022 Barcelona (ES)
(72) Inventor: RUFFINI, Giulio, 08022 Barcelona (ES); FARRÉS, Esteve, 08022 Barcelona (ES)
(74) Representative: Torner Lasalle, Elisabet
(86) International application number: PCT/ES2010/000416
(87) International publication number: WO 2011/048237

(57) **Abstract**

The system comprises:
- computation devices which process part of an algorithm in parallel in a concurrent and synchronized manner;
- communication means which interconnect said computation devices;
- control means connected to said communication means and to said computation devices and which are intended to control them;
- synchronization means comprising, in one (T1) or more of said computation devices, a monitoring and unblocking unit (Ua) configured to compare the data from the inputs (a, b) of the computation device (T1) thereof with a particular logic condition and, if there is a match, generating an unblocking signal for a processing unit (U1) of the computation device (T1).

The device is configured to form, with other devices, a processing system like that proposed.

## Description

### Field of the Art

The present invention generally and in a first aspect relates to a data processing system formed by computation devices operating in parallel to process, as a whole, an algorithm in a concurrent and synchronized manner, dividing the algorithm into parts and distributing them among the computation devices, and particularly to a system comprising synchronization means integrated in the computation devices.

A second aspect of the invention relates to a computation device configured to form, with other analogous computation devices, a processing system like that proposed by the first aspect.

### Prior State of the Art

Parallel processing systems aimed at concurrency which execute a task, algorithm or application with a certain degree of complication, by means of using a plurality of interconnected processors, with a limited processing capacity, such that it is not necessary to include elements with a high processing capacity, which sometimes, depending on the tasks to be executed, could be underused, but that the work to be performed is distributed between part of or among all the mentioned processors with limited processing capacity, have been known for some time.

One of such processors having limited processing capacity which became famous some time ago for constituting said parallel and concurrent processing systems is known as a transputer, the use of which over the years has considerably decreased.

There are a number of patent documents describing proposals relating to said parallel processing systems. Some of them are explained below as a significant sample of the state of the art.

Patent application EP-A-0570729 describes in the prior art section different proposals of systems including processors working in parallel, including transputers (such as the "Inmos Transputer T800"), hypercube-shaped interconnecting topologies, etc. Particularly, said patent application proposes a system for mass parallel processing different applications, incorporating a plurality of elements with memory and multiprocessing capacity, or MPPs, which in said patent application are defined as elements very similar to those conventionally known as transputers. According to an embodiment described in EP-A-0570729, interconnecting the MPPs by means of a modified hypercube topology, which basically consists of combining hypercube topology with ring topology, is proposed. It is also indicated that each MPP has the capacity to process both SIMD and MIMD instructions. EP-A-0570729 also mentions the possibility of "customizing", i.e., custom-programming, the logic designs or functions to be executed by sub-sections of each MPP.

Patent US5016163 proposes a parallel processing system formed by a plurality of transputers interconnected, for example, by means of a hypercube. The system includes control means dividing an algorithm into sub-algorithms, which assign each of the transputers for the purpose of performing a parallel processing of said algorithm.

Other such processors having limited processing capacity are referred to as ASIP (Application Specific Instruction Set Processor), which sometimes include in addition to basic instructions, custom instructions as described, for example, in the next two patent documents.

Patent application EP-A-1701250 proposes a microcomputer formed by a microprocessor with the capacity to operate in an ASIP mode, for which the microprocessor is designed with a set of basic instructions and with a set of custom instructions, with the corresponding custom hardware. The following are indicated in said application as commercially available ASIPs: *"Altera's NIOS",* described in "Nios embedded processor system development", *"Tensilica's Xtensa* ", described by R.E. Gonzalez in "Xtensa: A configurable and extensible processor", IEEE Micro, 20(2), 2000; and "*HP's and STMicroelectronics' Lx* ", described by P. Faraboschi et al. in "Lx: a technology platform for customizable VLIW embedded processing", Proc. of ISCA, 2000.

Patent US7398502 proposes a method and a system for concurrent processing with a FPGA. In the state of the art section, proposals relating to the use of a set of custom instructions in an ASIP, in addition to a set of conventional instructions, as well as the use of also custom memory architectures, are disclosed.

One of the big problems affecting most parallel processing systems aimed at concurrency, and which contributed to them not being as successful as first expected, relates to the synchronization of the different elements of the system, which can cause problems ranging from errors in results, due for example to the fact that the start of the processing by a second processor of the system of data available in a memory occurs before a first processor has registered the result of the processing thereof in said memory, to a low efficiency of the system in general, for example by having said second processor working before it should.

The use of synchronization mechanisms implemented by means of software in such systems is known, the use of the instruction referred to as "alting" in OCCAM process language is particularly known.

### Description of the Invention

The authors of the present invention consider that it is necessary to offer an alternative to the state of the art that overcomes the drawbacks of conventional systems, particularly in reference to the means used to carry out the mentioned synchronization.

For such purpose, in a first aspect, the present invention relates to a data processing system, comprising in a known manner:
- a plurality of computation devices operating in parallel for each of them to process part of an algorithm in a concurrent and synchronized manner;
- communication means configured to interconnect said computation devices through respective data inputs and outputs; and
- control means connected to said communication means and to said computation devices and which are intended to control them.

Unlike conventional systems, the system proposed by the first aspect of the present invention comprises synchronization means comprising, in part or in all of said computation devices, a monitoring and unblocking unit connected to the inputs of the respective computation device thereof and configured to compare data of said inputs with data relating to a particular logic condition, and to generate an unblocking signal for the purpose of unblocking the previously blocked operation of at least one processing unit of the computation device, depending on if there is a data match in said comparison.

Part of the computation device, at least its processing unit, is thus maintained in a standby state, while the data available at the input thereof are not suitable for being processed by it, i.e., they do not meet the mentioned particular logic condition. Said processing unit is therefore not made to work futilely when it is not necessary, thereby reducing total consumption of the system and increasing the efficiency and use of system resources by keeping the processing units, and optionally other elements associated with them, of several of the computation devices included in the system in standby when it is not necessary for them to be operating.

With respect to the entering into the mentioned standby state, i.e., to the blocking of the processing unit of a computation device, to carry it out in the system proposed by the first aspect of the invention, the mentioned synchronization means comprise, in part or in all of the computation devices, blocking/unblocking means configured to block the operation of at least said processing unit of the respective computation device thereof.

For one embodiment, said blocking/unblocking means are connected to said control means and to said processing unit of the respective computation device thereof and are configured to carry out said blocking of the operation of at least said processing unit under the control of said control means.

For one embodiment, the blocking/unblocking means are connected to an output of the monitoring and unblocking unit and configured to carry out said unblocking of the operation of at least said processing unit in response to receiving said unblocking signal.

In relation to the mentioned blocking, for an alternative embodiment said blocking is not carried out under the control of the control means, but the blocking/unblocking means comprise the monitoring and unblocking unit, which is also configured to generate a blocking signal for the purpose of blocking the operation of at least said processing unit, depending on if there is data discrepancy in said comparison, i.e., if the input data does not meet the mentioned, or another, particular logic condition, the monitoring and unblocking unit itself also acts as a blocking unit, stopping the operation of the processing unit.

With respect to the configuration of each of the computation devices included in the system proposed by the first aspect of the invention, for an embodiment each comprises at least one processing unit, an internal memory, and, forming part of said communication means, at least two data input ports and one data output port.

According to an embodiment, the computation devices are respective transputers or the like.

For a preferred embodiment, the set of all the internal memories of all the computation devices form the complete memory of the system that can be used for processing said algorithm, being distinguished from conventional systems which include an external memory outside the different computation devices, the access of which, by the computation devices, for registering or extracting data therein or there out, increases the problems of synchronism of the system in general.

The control means are configured to control the communication means to establish a logic interconnection between the computation devices implementing a particular topology, which can be selected from a plurality of topologies, depending on the embodiment, one of said topologies being a hypercube topology of n dimensions, and/or so that the communication means allow the system to operate according to a multibroadcast technique.

For an embodiment, the control means have access to data referring to said plurality of topologies, which are pre-determined, and are configured to select said particular topology automatically or subject to user intervention, selecting the data referring to same.

For one embodiment, by means of the connection with the computation devices, the control means are configured to control them so that they can adapt the operation thereof to the implemented topology and/or to said multibroadcast.

Although for a basic embodiment the connections between computation devices belonging to the communication means only transmit data, for another more elaborate embodiment at least part of said connections are configured to implement a further function in addition to that of simple data transmission.

For a variant of said more elaborate embodiment, said further function consists of temporarily storing data to be transmitted to a computation device, for which purpose each of said connections configured to implement said additional function comprises an internal memory where said storage is carried out under the control of the control means.

In general, all of said computation devices have an identical internal architecture in at least most of the components thereof.

For an embodiment, each processing unit is an arithmetic logic unit, ALU, and there are different ALU designs depending on the task to be executed for which the computation device to which they belong is dedicated.

For an embodiment, the system proposed by the first aspect of the invention is modular, each of the computation devices being a module, and the control means being configured to select automatically or subject to user intervention, the number and type of modules to be included in the system, as well as the connections between them, depending on the algorithm to be executed.

An application of interest of the proposed system, and for which it is adapted, is known as streaming, i.e., consisting of real time data processing.

A second aspect of the present invention relates to a computation device configured to process part of an algorithm in a concurrent and synchronized manner with other analogous computation devices.

Unlike conventional computation devices, the computation device proposed by the second aspect of the invention comprises synchronization means comprising a monitoring and unblocking unit connected to the inputs of said computation device and configured to compare data of said inputs with data relating to a particular logic condition, and to generate an unblocking signal for the purpose of unblocking the previously blocked operation of at least one processing unit of the computation device, depending on if there is a data match in said comparison.

For a preferred embodiment, the computation device proposed by the second aspect of the invention has the technical features of one of the computation devices of the system proposed by the first aspect of the invention.

### Brief description of the Drawings

The preceding and other advantages and features will be more fully understood from the following detailed description of embodiments in reference to the attached drawings which must be interpreted in an illustrative and non-limiting manner, in which:
Figure 1 is a block diagram schematically illustrating the computation device proposed by the second aspect of the invention, to be included in the system proposed by the first aspect, for one embodiment;
Figures 2a and 2b also schematically illustrate the system proposed by the first aspect of the invention, for one embodiment for which it is applied to processing signals from a GNSS-R system;
Figure 3 illustrates the microsequencer of the computation device of Figure 1 in detail;
Figure 4 shows the digital signal processing system of a GNSS-R system applied to the determination of the Delay Doppler Map DDM of a surface, said processing system being illustrated divided into modules or blocks, the function of each of which is carried out by one or more respective computation devices of the system proposed by the first aspect of the invention, according to the embodiment of Figures 2a and 2b or according to another embodiment that is different at least in part;
Figure 5a illustrates one of the registers of the alting unit Ua included in the computation device of Figure 1 for one embodiment; and
Figure 5b illustrates the part of the register of Figure 5a corresponding to the bits labeled as "mask".

### Detailed Description of Embodiments

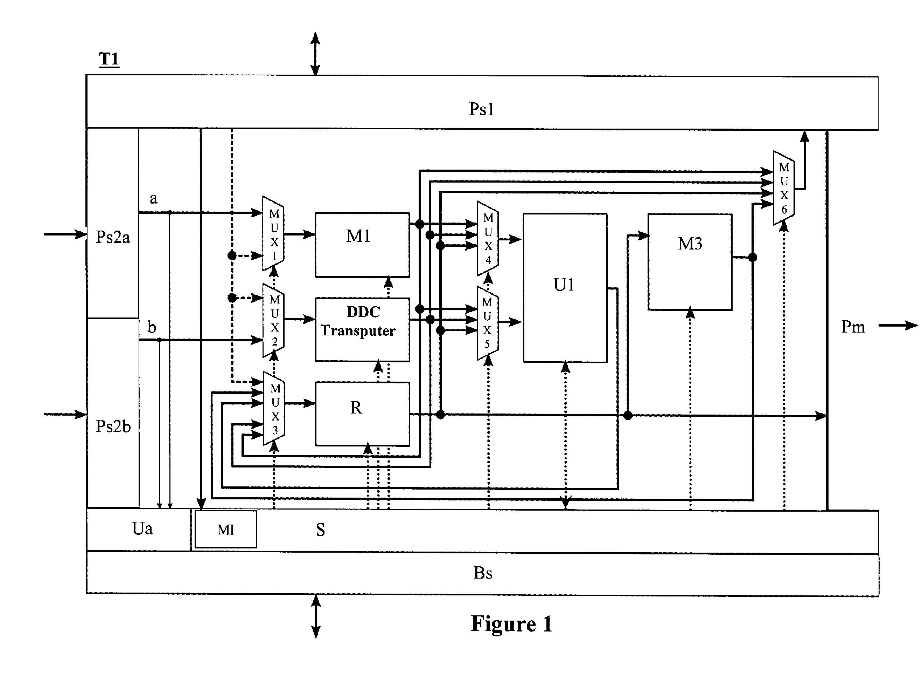

First in reference to Figure 1, it schematically illustrates a computation device T1 representative of both that proposed by the second aspect of the invention for one embodiment in which it is a transputer referred to in this section as WARP transputer, and of any of those included in the system proposed by the first aspect of the invention, or WARP (Waveform Rendering Process) system.

The WARP transputer is an ASIP (Application Specific Instruction Set Processor) with a set of configurable, custom instructions for effectively implementing a specific application. This core specialization provides a compromise between the flexibility of a multi-purpose CPU and the performance of an ASIC (Specific Application Integrated Circuit).

Continuing with the description of Figure 1, it can be seen therein how the transputer T1 comprises synchronization means comprising a monitoring and unblocking unit, or alting unit Ua, connected to the inputs a, b and configured to compare data of said inputs a, b with data relating to a particular logic condition (such as, for example, a<b, a>b, a=b, etc.), and to generate an unblocking signal for the purpose of unblocking the previously blocked operation of at least the processing unit U1 (and optionally of other internal components of T1), depending on if there is a data match in said comparison.

For a preferred embodiment, the mentioned processing unit U1 is an ALU, which provides resources to execute the part of the algorithm corresponding to T1, which part is generally in the form of a micro-algorithm, the sum of all the micro-algorithms implemented by the different transputers of the system constituting the algorithm to be executed.

With respect to the alting unit Ua, as previously indicated, this unit keeps the process blocked, i.e., at least the ALU operation, waiting for specific conditions to be met in the data inputs to which it is connected, the blocking having been produced by means of implementing any of the embodiments described in a preceding section, i.e., by the alting unit Ua itself, by order of the control means (for example sending an alting instruction), or by another mechanism. The alting unit Ua provides support for implementing the algebra of communicating sequential processes.

Generally, said alting unit Ua has access to the data present in the mentioned inputs "a" and "b" through respective memories (not illustrated), or input memories A and B, waiting for the mentioned particular logic condition to be met in one or in both of said memories A and B.

For one embodiment the unit Ua is controlled by a custom instruction, which is particularly the following in assembly language:

### custom 51, rC, rA, rB

rC, rA and rB referring to internal registers of the unit Ua, the meaning of which is the following:
- rA: Condition and Guard for input memory A.
- rB: Condition and Guard for input memory B.
- rC: Result data.

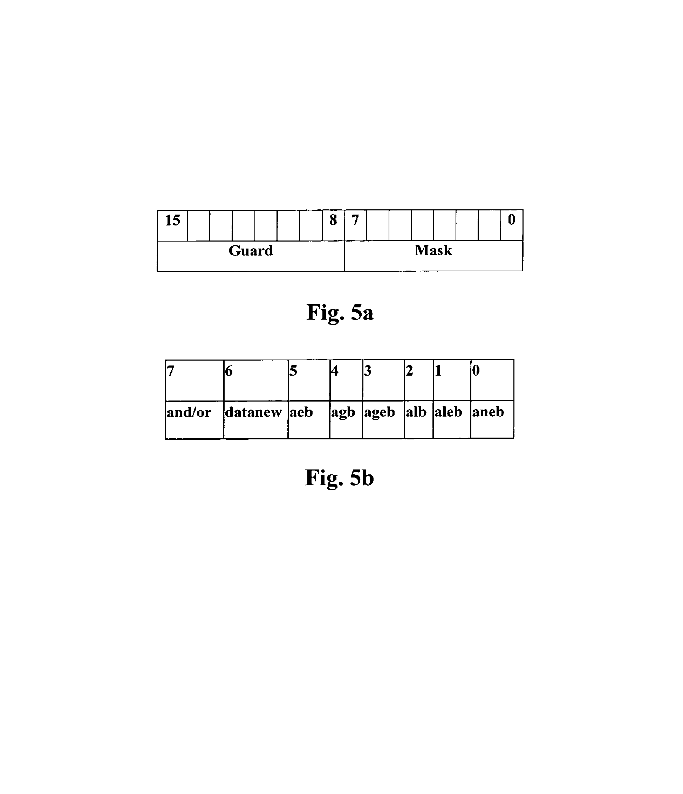

Figure 5a illustrates one of the registers rA or rB (both are equal). It can be seen how it comprises sixteen bits, eight of which forming the part indicated as "Mask", and the rest the part indicated as "Guard".

The "Mask" indicates the logic condition for which to wait, each bit thereof having its own meaning, indicated in Figure 5b, which illustrates only the part of the register corresponding to the "Mask". The meanings of each of said bits of Figure 5b are the following:
- **aneb**: the address indicated in the "Guard" field is different from that signaled by the write pointer of the memory.
- **aleb**: the address in "Guard" is less than or equal to that signaled by the write pointer of the memory.

- **alb**: the address in "Guard" is less than that signaled by the write pointer of the memory.
- **ageb**: the address in "Guard" is greater than or equal to that signaled by the write pointer of the memory.
- **agb**: the address in "Guard" is greater than that signaled by the write pointer of the memory.
- **aeb**: the address in "Guard" is equal to that signaled by the write pointer of the memory.
- **datanew**: New data has just arrived to the memory. It only acts when the Transputer is waiting for data. If the data arrives before the unit Ua is ordered to act (for example by means of the mentioned sending of an alting instruction by the control means), this data will not be considered as new.
- **and/or**: If this bit is at "1", the alting unit Ua will wait for the logic condition indicated in each of the registers rA and rB in the respective memories A and B to be met before unblocking the WARP transputer (at least ALU U1). In both registers rA and rB this bit must be at "1 ". If it is at "0" unblocking will take place when the logic condition is met in one or in both of registers rA or rB.

For said embodiment the data being waited for which meets the particular logic condition is the data referring to the content of the write pointer of the memory (A and/or B), which must be understood as part of the data included in the inputs a and/or b. For other embodiments the data to be compared, or in other words to be analyzed, to determine whether or not it meets a particular logic condition is different data not referring to said pointer, but to other fields of said memories A and B.

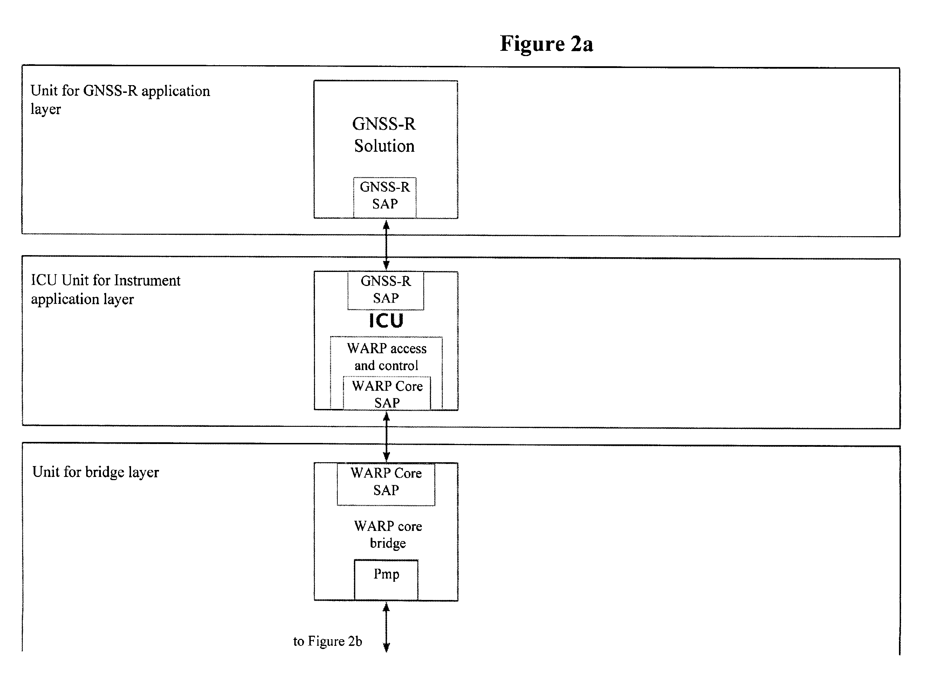

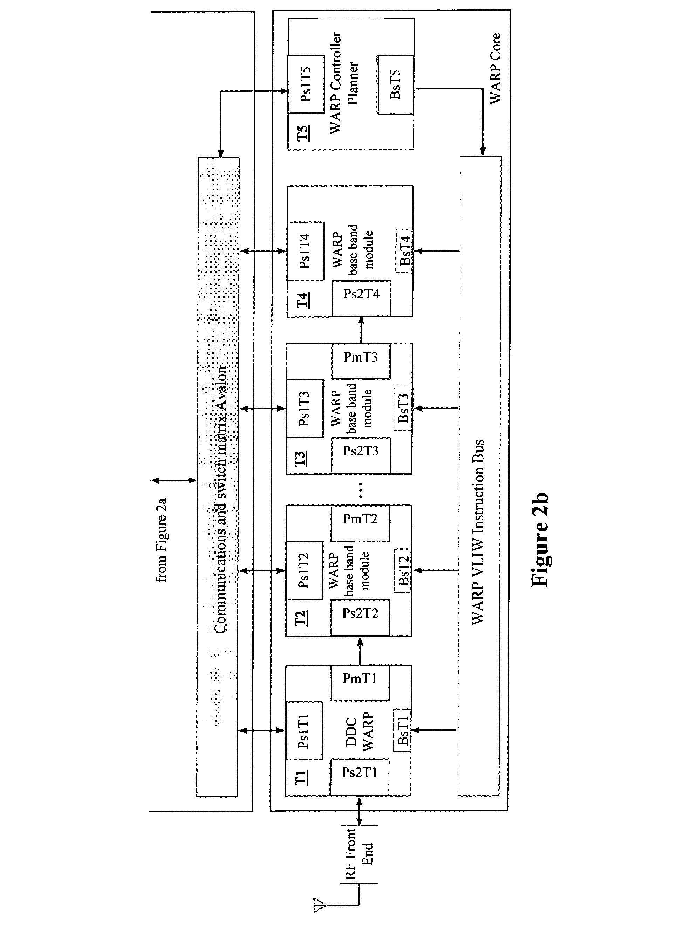

The remaining main blocks of the computation device T1 for the embodiment illustrated in Figure 1 are described below, being the following:
- S: micro-sequencer controlling the execution of each micro-algorithm, by means of the control of the various internal elements of the WARP transputer T1, by means of sending the appropriate signals through the dotted-line arrows illustrated in Figure 1. It incorporates an instruction memory MI where the micro-algorithms are downloaded through the communication port Ps1.
- M1, M2, M3: Data memories, particularly M1, M2 are dual port memories for storing the input data in the WARP transputer, and M3 is a dual port memory provided for storing the results in data form.
- Interfaces forming part of those referred to above as communication means:
- Ps1 : Communication port, as slave, with an instrument control ICU unit (see Figure 2a), included in the aforementioned control means, which uses it to download micro-algorithms, data and parameters, as well as to control the WARP transputer T1. For one embodiment, it is a 32-bit Avalon Memory Mapped port and provides access to the registers and internal memories of the WARP transputer T1, so the operation thereof can be controlled by the ICU.
- Ps2a and Ps2b: Slave data input ports which provide data through their outputs a, b communicated with, respectively, memories M1 and M2. For one embodiment, these are 32-bit Avalon Streaming ports. The channel information can be used to direct the incoming data towards the multipurpose registers R.
- Pm: Data output master port to supply the result of the operations performed in the transputer, i.e., execution of the micro-algorithm. For one embodiment, it is a 32-bit Avalon Streaming port for data output. The channel forming this port can be used as a logic or physical channel for data stream control. It can optionally have more than one output master port Pm.
- Bs: Synchronization bus, which forms an interface with a controlling/planning device (see Figure 2b) forming part of the control means, providing synchronization and interruption features. It enables starting/stopping the operation of the transputer based on the orders from said controlling/planning device.
- R: Multipurpose registers.
- MUX1-MUX6: Multiplexers which, under the control of the microsequencer S, direct the data present in one of the inputs thereof towards the element that is connected in its output, whether it is one of the memories M1-M3, multipurpose registers R, ALU U1, or port PS1.

The alting unit Ua illustrated in Figure 1 is communicated with the microsequencer S, to which it sends the mentioned unblocking signal so that the latter, in response to said signal, acts on the different elements to be unblocked (by means of the connections indicated by the dotted-line arrow illustrated) so that they again become operative. The microsequencer is also responsible for blocking said elements either based on an order from the unit Ua, or based on an order from the control means, said order being sent through the bus Ps1 or by means of an instruction received through the bus Bs.

Figures 2a and 2b illustrate the system proposed by the first aspect of the invention for one embodiment. Some of the illustrated elements have been indicated by means of textual references the meaning of which indicates the name and function of the elements to which reference is made. Said Figures 2a and 2b particularly illustrate a data processing system comprising:
- A plurality of computation devices T1-T5, or transputers, operating in parallel for each of them to process part of an algorithm in a concurrent and synchronized manner. Although only five transputers T1-T5 are illustrated in Figure 2b, the dotted line between the transputers T2 and T3 indicates the existence of a larger number of transputers interconnected in series by their output and input ports;
- communication means configured to, among others, interconnect said computation devices T1-T5 through respective data inputs and outputs. Said communication means comprise, for the embodiment illustrated in said Figures 2a and 2b, all the connections between the different elements illustrated, as well as the communications and switch matrix to which there are bidirectionally connected on one hand the transputers T1-T5 and on the other the control means

represented by means of three processing units implementing three corresponding software layers which will be described below in greater detail, and which are implemented in one or several computation systems, among them the aforementioned ICU;
- control means connected to said communication means and to said computation devices T1-T5 and which are intended to control them. For the embodiment illustrated in Figures 2a and 2b, said control means comprise the mentioned computation systems, which include the ICU, implementing said three software layers, as well as the transputer T5 which acts, by means of the execution of a microprogram, like a controller/planner of the general execution, synchronized stops and starts, of the remaining transputers T1-T5 by means of sending the result of the processing of said microprogram through the interface indicated in Figure 2b by the text reference "MIMD VLIW WARP ", because it supplies very long instruction words, or MIMD, by means of mechanisms of multiple instruction, multiple data stream.

Figure 2a depicts at block level the mentioned three processing units, indicated as:
- Unit for GNSS-R application layer;
- ICU Unit, or instrument control unit, for Instrument application layer; and
- Unit for bridge layer.

The definition of the software layers indicated is done according to the design guidelines of the OSI seven layer model. Each layer provides a set of access points (SAP) between software layers, indicated in Figure 2a as SAP GNSS-R, for communicating the software layers implemented in the units for GNSS-R application layer and the ICU unit, and WARP core SAP for communicating the software layers implemented by the ICU unit and by the unit for bridge layer.

A block called GNSS-R Solution referring to a software solution for a specific application relating to GNSS-R (Global Navigation Satellite System Reflections) signal analysis has been depicted in the unit for GNSS-R application layer. This layer provides services and libraries of high abstraction level routines aimed at developing the application. It is an implementation of the OSI presentation and application layers.

With respect to the ICU unit, a block representing the ICU software layer with a WARP access and control interface housing the WARP core SAP has also been depicted in said unit. This layer provides a hardware abstraction for accessing and controlling the hardware and software resources of the instrument in question, in this case a GNSS-R instrument. It is an implementation of the OSI network, session and transport layers.

Finally the unit for bridge layer includes a block representing the software layer "WARP core bridge" managing the hardware, the WARP core of transputers T1-T5, and provides independence with respect to the implementation of the PHY communication platform, i.e., of the physical layer. Its design corresponds to the specifications of the implementation of an OSI data link layer.

The mentioned access points, SAP, for connecting the different layers also corresponds to the specifications of those marked with the SAP identifying label for the endpoints ("endpoints") of an OSI network. SAP is a conceptual location in which a WARP layer can require the services of another WARP layer.

Although three processing units have been indicated in the present description for implementing the three software layers described, this has only been done for the purpose of describing one embodiment, but for other embodiments the implementation of said software layers is done using another number of processing units less than or greater than three.

The mentioned three processing units are also part of one or more computation systems, depending on the variant of the embodiment described.

For other embodiments, the control means also comprise one or more computation systems implementing an architecture different from that described, with respect to both the hardware and the software, not necessarily performing the described division into layers.

Although not illustrated, at least part of the transputers T1-T4 shown in Figure 2b include an alting unit Ua such as that illustrated in the transputer T1 of Figure 1, so that a transputer does not process the data existing at its inputs until they are considered as being suitable by the corresponding alting unit, i.e., until they meet a particular logic condition.

Only part of the internal elements of the transputers, has been illustrated in said Figure 2b in a simplified manner, including the slave input ports Ps2T1 to Ps2T4 (which are each actually formed by two ports a and b, as illustrated for the transputer T1 in Figure 1), the slave ports Ps1T1 to Pe1t4 in bidirectional communication with the ICU (actually with all the computation systems, included the ICU, implementing the three software layers illustrated in Figure 2a), the master output ports PmT1-PmT3 of the three first transputers T1-T3 for data output (in this case the transputer T4 supplies the data output through PsT4), as well as the synchronization buses BsT1- BsT4 through which the respective microsequencers (not illustrated) receive VLIW from T5, after passing through the bus indicated as "WARP VLIW Instruction Bus". Such ports BsT1-BsT4 are SIMD ports, i.e., Single Instruction, Multiple Data stream, so each of them receives part of the MIMD sent in the VLIW, and are communicated with a respective microsequencer S (not illustrated in Figure 2b).

For one embodiment, the master output ports, for example PmT1, are 32 bit ports and each of the slave ports a and b of, for example Ps2T2, are 16 bit ports, so 16 bits of the output of PmT1 are sent to port a of Ps2T2 and the other 16 bits to port b. For another embodiment, the master output ports PmT1-PmT3 have the same number of bits as each of the input ports a and b of PsT1-PsT4, sending in this case, for example, the 16 bits present in PmT1 to input a of PsT2 in a clock cycle, and those present in a consecutive clock cycle to input b.

The absence of any of said elements in some of the transputers illustrated does not mean that some of said transputers lack them, but simply that they do not use them for the application illustrated in said Figures 2a and 2b, i.e., for example, the transputer T5 may or may not have slave input ports Ps2T5 (not illustrated) for data input, simply in that case they are not being used.

In fact, advantageously, all the transputers T1-T5 are virtually identical with respect to their internal architecture, with the exception of the ALU, which are designed depending on the task to be executed for which the computation device T1-T5 to which they belong is dedicated, for the purpose of executing it more efficiently, particularly for custom instructions to be executed.

For one embodiment representative of an implementation that has been carried out to practice, the interface of each ALU meets the specifications of the custom instruction ALU of the Nios II microcontroller with multi-cycle process control, although without implementing the optional interfaces with external memories, FIFO, etc., because these elements are not in the system proposed by the invention.

The ALU is therefore a high-speed arithmetic logic unit of few resources implementing, for one embodiment, a 16-bit data signed arithmetic, being optimized for each WARP transputer, but in all the cases providing the operations and arithmetic required for supporting the execution of the microalgorithm and the control of data stream.

By default, all the instructions of each ALU are executed in two clock cycles, but in the case of custom instructions requiring an additional clock execution, an internal register block of the ALU stores the data of the call to the previous custom instruction.

The custom instructions accepted by the ALU can be both SIMD and MIMD, it being necessary to use the internal registers of the ALU for MIMD instructions.

Each of said transputers T1-T5 constitutes a module, or DSP (digital signal processor), some of which are provided to execute the same functions, particularly T1, T2 and T3, labeled as "WARP baseband modules", and other functions, T1 for example performs a function labeled as "DDC WARP", and T5 processes the previously described controller/planner microprogram.

The entire set of transputers T1- T5 together with the WARP VLIW instruction bus constitute, for the embodiment illustrated in Figure 2b, that referred to as WARP core, which groups the WARP transputers together executing the algorithm as a whole.

The application for which the system illustrated in Figures 2a and 2b is configured relates to processing the information contained in RF signals, particularly of a GNSS system, received by T1, through the element indicated as RF front end associated with the illustrated antenna, which is a digital down converter, or DDC, block the result of which is processed by T2 to T3, which together perform a baseband processing of the signals resulting from the processor of T1.

Although only one output line has been depicted for the RF front end illustrated in Figure 2b, it actually supplies two input signals to port slave Ps2T1, one to port a and another to port b, in this case originating from a GNSS-R system.

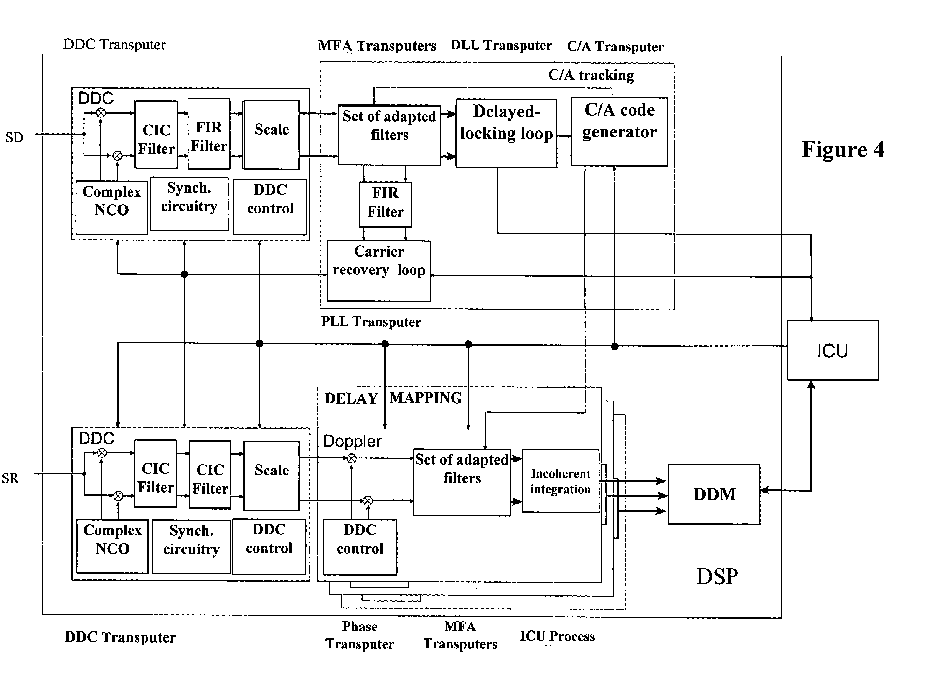

The application of the system proposed by the first aspect of the invention for a system of such type, i.e., for implementing a processing system of a GNSS-R system, indicating how to divide the processing system into modules or blocks with different functions, each of which is to be performed by one or more respective WARP transputers, will be described below in further detail in reference to Figure 4.

This is obviously only one application, and Figures 2a and 2b could illustrate the processing system for any other class of RF signals, in which case the GNSS-R application and solution indicated in Figure 2a would be of another class, suitable for the processing system to which they are applied.

As previously indicated, the proposed system is applied to massive parallel processing of algorithms which, in the case of being processed by means of a single microprocessor or DSP, would make the system too slow and too large. WARP transputers also provide a complete structure for critical designs over time where designing and building a custom state machine would excessively increase the marketing period.

WARP transputers are therefore small dedicated processors which process a small part of an algorithm, work in parallel with other WARP transputers, and are supervised by a WARP controlling/planning device which is transputer T5 for the embodiment of Figure 2b.

Each WARP transputer can be considered as an RISC computerized machine using a minimum ISA instruction set to execute small parts of algorithms: microalgorithms. The feature of the microalgorithms is the extremely deterministic behavior of the data stream and of the data operation.

As previously indicated, for a preferred embodiment, WARP transputers are connected by means of a hypercube topology implemented by the communication means, also referred to as WARP Fabric, which allow interconnecting WARP transputers to perform computing parallelism with concurrent data stream control.

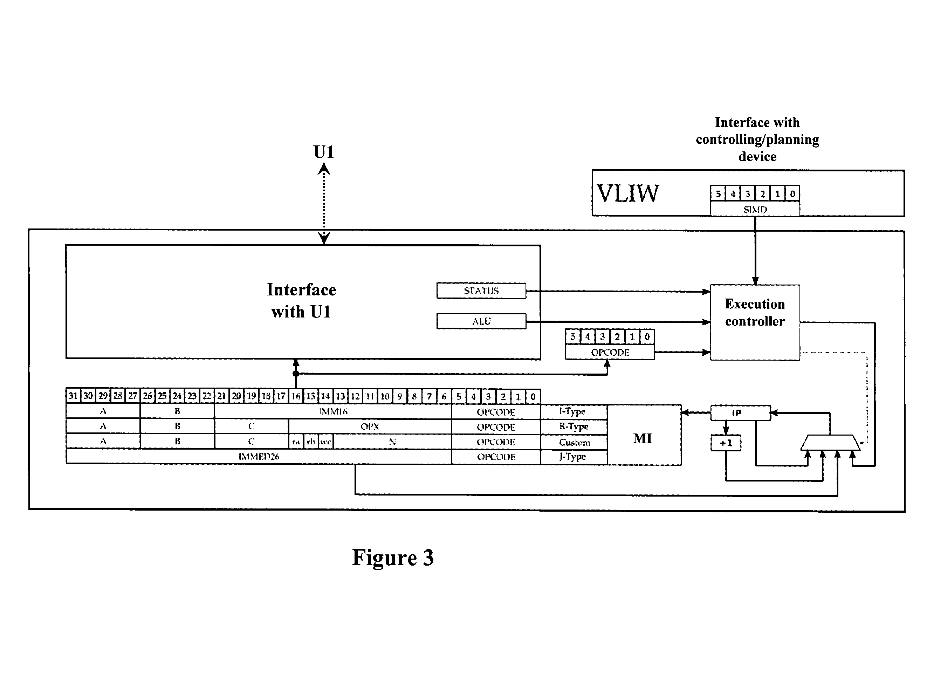

Continuing with the description of the computation device proposed by the second aspect of the invention, and particularly of WARP transputer T1 illustrated in Figure 1, Figure 3 illustrates in detail the microsequencer S of said transputer T1 for one embodiment, the description of which, which will be provided below for both its architecture and for its connections and the functions of the different blocks integrating it, is also valid for the microsequencer of any transputer included in the system proposed by the first aspect of the invention.

The microsequencer S illustrated in Figure 3, or WARP microsequencer, is a high-speed microsequencer using few resources with signed arithmetic support of 16-bit data and control of internal high-capacity data paths.

For one embodiment or practical implementation, the design of the WARP microsequencer has been inspired by that of the Avalon® microsequencer introduced by ALTERA® in 2003, such that the WARP microsequencer has an instruction set resembling the instruction set of the Nios II processor (implemented using FPGA logic), which for one embodiment has also inspired the design of the WARP transputer, the latter obviously having a much simpler architecture than that of Nios II, as well as a program controller and a generator of instructions that are also simplified to adapt them to minimum requirements.

With respect to the implementation of the communication means, or WARP Fabric, said means are based, for one embodiment, on Avalon® interfaces and provide standard interfaces in the development of the WARP core (see Figure 2b).

The main features of the architecture of the WARP S microsequencer for the embodiment illustrated in Figure 3 are the following:
- Instruction memory indicated as MI in Figure 3 (and in Figure 1), in which the instructions of the micro-algorithm to be executed are registered.
- Instruction pointer IP register, indicated as IP in Figure 3, which is responsible for pointing to, in memory MI, the next instruction to be executed;
- Interface with WARP ALU (with "Status" and Z registers), i.e., with U1 for the case of transputer T1, indicated as "Interface with U1" in Figure 3; through this interface the ALU provides information about the possible branches or bifurcations;
- "Execution controller" block, which is responsible for controlling the IP register;
- Interface with the controlling/planning device (indicated as such in Figure 3), in communication with the execution controller to provide additional synchronization between the components of the WARP core (see Figure 2b).

Microsequencer S works by means of the step by step execution of a 32-bit microcode stored in a synchronous internal memory ROM/RAM, that referred to in Figure 3 as instruction memory MI. The 32-bit instruction word is compatible with the 32-bit instruction words of the Nios II microcontroller. The size of the instruction memory MI ROM is configurable (up to 64K of instruction words).

As previous stated, the WARP microsequencer has an instruction set resembling the instruction set of the Nios II processor. Such instruction set is encoded in 32-bit words and define the arithmetic and logic instructions implemented in the system proposed by the first aspect of the invention.

Figure 3 shows the formats of the different types of instructions used in the WARP system, three of them are instruction words, specifically the I-type instructions, J-type instructions and R-type instructions, and another is a custom instruction.

With respect to the type I instruction word, said word is defined because it uses an immediate value encapsulated inside the instruction word, and contains, as illustrated in Figure 3:
- a 6-bit operation code field referred to as OPCODE;
- two register fields A and B, each being 5-bit; and
- a 16-bit immediate data field, referred to as IMM16.

In most cases, fields A and IMM16 specify the source operands, and field B specifies the destination register. IMM16 is considered signed except for logic operations. I-type instructions include arithmetic and logic operations such as "add" and "and", branch or bifurcation operations, loading and storage operations and cache memory management operations.

The R-type instruction word is defined because all the arguments and results are specified as registers and contain, as illustrated in Figure 3:
- a 6-bit operation code field referred to as OPCODE;
- three register fields A, B and C, of five bits each; and
- a 12-bit operation code extension field, referred to as OPX.

In most cases, fields A and B specify the source operands, and field C specifies the destination register. Some R-type instructions integrate a small immediate value in the low-order bits of OPX. R-type instructions include arithmetic and logic operations such as "add" and "and", comparison operations such as "cmpeq" and "cmplt", the instruction "custom", and other operations which only need register operands

With respect to the J-type instruction word, said word contains, as illustrated in Figure 3:
- a 6-bit operation code field referred to as OPCODE; and
- a 26-bit immediate data field, referred to as IMMED26.

J-type instructions, such as, for example, instructions "call" and "jmpi", transfer an execution to any site within a range of 256 MBytes. This long address is mapped in the WARP transputer, making the module of the memory address in relation to the size of the program memory.

With respect to the instructions "custom", or custom instructions, said instructions are based on Nios II native instructions (which only provides custom logic integrated in the ALU), and they can similarly assume values of up to two source registers and optionally write the result in a destination register, with the difference with respect to Nios II that in this case all these registers are internal to the WARP transputer.

In Figure 3 it can be seen how the instruction "custom" includes:
- a 6-bit operation code field, referred to as OPCODE;
- three register index fields A, B and C, each being 5 bits;
- three fields, 1 bit each, for the ports "readra", "readrb" and "writerc"; and
- an 8-bit field N used for indexing the instruction "custom" (operation code extension), and which optionally includes a function selection sub-field.

The syntaxis of the custom instructions of the WARP transputer is compatible, for the embodiment described, with that of the assembler interface of the custom instructions of Nios II.

Continuing with the description of Figure 3, it can be seen therein how the microsequencer S includes a block referred to as "execution controller", which controls the execution sequence of the instructions stored in MI. Said block updates the IP register according to the following data:
- That of the register indicated as "OPCODE", which stores the instruction in execution;
- That of the result of the logic arithmetic or custom instruction in the event that the instruction is I-type or R-type.
- The direction of J-type instruction.
- The SIMD instruction extracted from the VLIW instruction word sent by the controlling/planning device which is the WARP transputer T5 for the embodiment of Figure 2b.

With respect to the mentioned "Interface with U1", it is provided both for supplying the instructions to be executed for the purpose of controlling execution of the micro-algorithm, and for receiving in corresponding registers included in the interface, indicated as "STATUS" and "ALU" in Figure 3, the status of U1 and its output, respectively. Depending on the values of said registers the execution controller acts one way or another, stopping the execution or jumping to the next address provided by the ALU.

The STATUS register provides information in bit form to carry out execution concurrency.

With respect to the interface with the controlling/planning device, which is the WARP transputer T5 in the embodiment of Figure 2b, it allows externally controlling execution for the purpose of providing part of the synchronization between the different WARP transputers, by means of the already described sending of the MIMD instruction, part of which is received by the microsequencer S in the form of an SIMD which, as shown in Figure 3, reaches the block execution controller.

It has been estimated that a suitable size for the instruction memory MI, which is configurable, must be sufficient for storing at least 32 words, and at the most 256.

The operation of the microsequencer S for the execution of an instruction according to one embodiment is described below.

The core of the WARP microsequencer S issues a single instruction every time. The instructions are issued and withdrawn in order. Only in the case relating to the evaluation of a branch or bifurcation, the execution controller waits for an instruction to be completed before loading and issuing a new instruction; in this case the execution controller stops during six clock cycles.

Since each branch or bifurcation instruction is completed before the next instruction is issued, a branch or bifurcation prediction is not necessary. This greatly simplifies the consideration of processor stops. The cycles per instruction value determine the maximum rate at which the ALU, i.e., U1 for T1, can issue instructions and produce each result. The latency value determines when the result is available. If there is no data dependence between the results and the operands for attached instructions, then the latency does not affect the data stream. However, if an instruction depends on the result of a prior instruction, then the "execution controller" of the microsequencer S must remain stopped throughout any of the result latency cycles until the result is ready. When and how long the microsequencer S (by means of the execution controller) must maintain the execution process, i.e., not send a new instruction to the ALU, depends on the content of the STATUS register which will include a suitable signal when the ALU has finished processing its instruction and the microsequencer S must continue with the pipeline process.

The pipeline process must remain stopped for the following conditions:
1. Multicycle instructions.
2. Data dependencies in long latency instructions (for example multiplication, shift, etc.).

By default, the microsequencer S does not implement pipeline stops, software engineers generally introduce an NOP (No Operation) instruction set, i.e., relating to not performing any operation, to inform that the last instruction of the ALU U1 involving the data is completed. In some cases in which the execution flow is not critical, software engineers can enable ALU U1 stop control. In this operating mode, the ALU U1 will stop the microsequencer S in each phase of execution for all the instructions, providing all the data. The maximum penalization in the performance of the microsequencer S per instruction is that caused by execution instruction cycles of the ALU. The typical execution of an instruction by the ALU is of one cycle, but it could be of six cycles in cases of long latency.

The shift operation execution depends on the hardware option of the ALU of the WARP transputer. When it has multiplying hardware, the ALU is able to perform shift and rotation operations in three or four clock cycles. In contrast, the ALU includes dedicated shift circuitry which achieves shift and rotation execution of 1 bit per cycle.

The microsequencer S only requires the functions of the ALU for the case of conditional branch or bifurcation evaluation, and a time execution must be considered in the case of using register address jumps. The remaining instructions of the microalgorithms are executed in a single clock pulse.

The data synchronization and data stream control is an essential element in a multi-core system. The architecture of the system proposed by the present invention, i.e., WARP architecture, manages these issues by combining physical/logic synchronous communication between WARP transputers with protections or guards and selection declarations stopping/starting execution of the microalgorithm. The "Alting" instruction and the previously described alting units Ua of the transputers provide support for this communication scheme which is defined in programming language as rendezvous (mechanism for sharing data between tasks in a synchronized manner). Examples of programming languages with rendezvous communication are Ada05, CSP and OCCAM.

Finally, and as previously indicated, the digital signal processing system, or digital signal processor DSP, of a GNSS-R system applied to the determination of the DDM (Delay Doppler Map) of a surface, divided into modules or blocks, the function of each of which is carried out by a respective transputer with its respective custom ALU, i.e., adapted to execute particular custom instructions, to carry out the function for which it is provided, is described below in reference to Figure 4.

Figure 4 illustrates some of the transputers with one input and two outputs, or with two inputs and two outputs, which for a preferred embodiment, with the WARP transputers illustrated in Figure 4 being like those of Figure 1 with respect to number and type of input and output ports, is representative of that the previously referred to as WARP Fabric implements a series of multiplexers and/or distributors connected to the mentioned ports, such that, for example, the input SD associated with the DDC Transputer is distributed to its two slave input ports Ps2a, Ps2b (see Figure 1), and similarly with respect to the remaining ports.

Although it has previously been indicated that each WARP transputer has two slave input ports (Ps2a and Ps2b for T1 in Figure 1) and one master output port (Pm for T1 in Figure 1), such indication is not limiting, transputers with more or less slave input ports and more or less master output ports being able to be used for other embodiments.

For other embodiments, with reference to Figure 4, the fact that transputers with a number of input and output ports different from those of Figure 1 have been illustrated therein is representative of:
- that mentioned in the preceding paragraph, i.e., that some of the transputers has more or less master output ports and of more or less slave input ports, or
- that the slave input ports are of half the bits with respect to the ports connected thereto, whether they are the output ports of another transputer or those of another class of device (as in the case of the devices not illustrated the outputs of which communicate with the inputs of the DDC transputers of Figure 4), or
- that since the slave input ports are identical in number of bits to the ports connected thereto, two clock cycles are used to send the data to each of the two input ports in an alternating manner.

The embodiment illustrated in Figure 4 is of particular interest for the present applicant, as it is applied to an instrument designed by the applicant in a project referred to as RETO, meaning Real Time DDM Oceanpal, for monitoring ocean surfaces based on the Oceanpal® design, a system designed by the present applicant for the same purpose.

RETO has been developed with the support of the fourth "GSTP Announcement of opportunity" of ESA (European Space Agency), and the objective is to implement an embedded Delay Doppler Map processor. RETO is an instrument based on GNSS-R developed by the present applicant.

The Delay Doppler Map is the starting point for inversion algorithms capable of estimating the square root of the mean directional slope of the sea surface from which information with respect to the wind blowing over the sea surface can be obtained.

Twenty-four WARP transputers in a half core high-density FPGA platform with an embedded processor have been used to implement the RETO instrument. Not all of said twenty-four transputers are illustrated in Figure 4, only the main ones.

The RETO instrument analyzes both the direct signal SD originating from a GPS satellite and the reflected signal SR which is said GPS signal once reflected on the sea surface, each of said signals being captured by an RF front end including a respective GPS antenna, both front ends together forming the radio frequency section of the mapping system, the outputs of which are connected to the inputs of the processing system, or DSP, implemented by the RETO instrument, which is responsible for processing the signals originating from said radio frequency section, i.e., SD and SR. Figure 4 illustrates the RETO instrument with its two corresponding inputs for said two signals SR, SD, as well as the different blocks or modules for treating them.

To implement the modules of the RETO instrument in hardware, the RETO DSP has been divided as illustrated in Figure 4, i.e., grouping said modules in groups which include one or more modules, the various groupings having been depicted by gray rectangles. As previously indicated, only the transputers responsible for carrying out the main tasks are shown.

It can be said that said Figure 4 depicts a mapping of the blocks of the DSP in the different WARP transputers included in the system proposed by the first aspect of the invention.

Each of said groups represents one or more respective WARP transputers, i.e., the function or functions the different blocks included in each of the gray rectangles perform, is performed, according to the present invention, by one or more respective transputers with the custom instructions necessary for carrying them out efficiently.

Particularly, with respect to the direct channel, i.e., that followed by the direct signal SD, it requires at least six WARP transputers to monitor each PRN, or Pseudo Random Noise, code.

The tasks assigned to each of said six WARP transputers are:
1. DDC, or digital down conversion. This task is performed by the higher DDC Transputer, and consists of converting the IF signal to baseband. A set of digital filters extracts the noise from the band of interest.
2. Adapted filtering. To perform this task, two transputers are needed, one for each of the quadrature signals (I and Q). These transputers, indicated as MFA Transputers in the upper part of Figure 4, implement adapted filtering on the incoming data with the internal replica, one for the phase component (I) and the other for the quadrature component (Q).
3. Carrier recovery. The transputer responsible for performing this function, indicated as PLL Transputer, follows the complex wave shape to recover its carrier frequency affected by the Doppler shift.
4. Monitoring the C/A code. This task, consisting of controlling the generation of the replica to obtain the alignment of the C/A code, is divided into the following two tasks:
   - Delay locking, task which is carried out by the DLL Transputer implementing a delay-locked loop; and
   - C/A code generation, carried out by means of the C/A Transputer.

With respect to the reflection channel, i.e., that followed by the reflected signal SR, for its processing at least four WARP transputers are required to perform the following tasks:
1. DDC. This task is performed by the DDC Transputer illustrated in the lower part of Figure 4, and it carries out the same function as the higher DDC Transputer but applied to signal SR, and works synchronously with said DDC Transputer applied to SD.
2. Doppler (DDM). This function is carried out by the so-called phase Transputer, which provides the Doppler shift of the reflection channel with respect to the direct channel, by means of the illustrated DDC control block and mixers. A set of Doppler blocks like this provide diverse Doppler planes in delay Doppler mapping, DDM.
3. Adapted filtering: Like in the direct channel, this task is carried out by two transputers, indicated in the lower part of Figure 4 as MFA Transputers, which carry out the same function as those of the direct channel but applied to the reflection channel.

By means of the mentioned adapted filtering together with the function indicated as Doppler, applied to the reflection channel, they provide, together with the task carried out by the block indicated as "incoherent integration", the delay Doppler mapping. Figure 4 shows how the rectangle indicated as "Delay Mapping" overlaps two other similar rectangles. Each of said rectangles represents one of the respective mentioned Doppler planes, in this case three, and those previously referred to as phase Transputer and MFA Transputers can perform processing for the three planes or a larger number of transputers, one for each Doppler plane, can be used.

Figure 4 includes said incoherent integration block together with the DDM block, both inside the DSP, grouped by means of a gray rectangle indicated as "ICU Process" together with the ICU block forming part of the control means. This is indicative that, for one embodiment, the function carried out by said blocks, one of which is external to the DSP, is related to control of the operation of the transputers illustrated in said Figure 4, said control being carried out, for one embodiment, in a manner similar to that described in reference to Figure 2, including a controlling/planning device (not illustrated in Figure 4), or otherwise, for another embodiment.

For another embodiment, the function of said incoherent integration block and that of said DDM block are carried out by means of other additional WARP transputers.

A person skilled in the art could introduce changes and modifications to the embodiments described without departing from the scope of the invention as it is defined in the attached claims.

## Claims

1. A data processing system, of the type comprising:
- a plurality of computation devices (T1- T5) operating in parallel for each of them to process part of an algorithm in a concurrent and synchronized manner;
- communication means configured to interconnect said computation devices (T1-T5) through respective data inputs and outputs;
- control means connected to said communication means and to said computation devices (T1-T5) and which are intended to control them;
said data processing system being **characterized in that** it comprises synchronization means comprising, in at least part (T1-T4) of said computation devices (T1-T5), a monitoring and unblocking unit (Ua) connected to the inputs (a, b) of the respective computation device (T1-T4) thereof and configured to compare data of said inputs (a, b) with data relating to a particular logic condition, and to generate an unblocking signal for the purpose of unblocking the previously blocked operation of at least one processing unit (U1) of the computation device (T1-T4), depending on if there is a data match in said comparison.

2. The system according to claim 1, **characterized in that** said synchronization means comprise, in at least part (T1-T4) of said computation devices (T1-T5), blocking/unblocking means configured to block the operation of at least said processing unit (U1) of the respective computation device (T1-T4) thereof.

3. The system according to claim 2, **characterized in that** said blocking/unblocking means are connected to said control means and to said processing unit (U1) of the respective computation device (T1-T4) thereof, and configured to carry out said blocking of the operation of at least said processing unit (U1) under the control of said control means.

4. The system according to claim 2 or 3, **characterized in that** said blocking/unblocking means are connected to an output of said monitoring and unblocking unit (Ua), and configured to carry out said unblocking of the operation of at least said processing unit (U1) in response to receiving said unblocking signal.

5. The system according to claim 2, **characterized in that** said blocking/unblocking means comprise said monitoring and unblocking unit (Ua), and **in that** said unit (Ua) is also configured to generate a blocking signal for the purpose of blocking the operation of at least said processing unit (U1), depending on if there is data discrepancy in said comparison.

6. The data processing system according to any of the preceding claims, **characterized in that** each of said computation devices (T1-T5) comprises at least one processing unit (U1), at least one internal memory (M1-M3), and, forming part of said communication means, at least two data input ports (Ps2a, Ps2b) and at least one data output port (Pm).

7. The system according to claim 6, **characterized in that** the set of all the internal memories (M1-M3) of all the computation devices (T1-T5) form the complete memory of the system that can be used for processing said algorithm.

8. The system according to any of the preceding claims, **characterized in that** said control means are configured to control said communication means to establish a logic interconnection between said computation devices (T1-T5) implementing a particular topology, which can be selected from a plurality of topologies, and/or so that said communication means allow the system to operate according to a multibroadcast technique.

9. The system according to claim 8, **characterized in that** said control means have access to data referring to said plurality of topologies, which are pre-determined, and **in that** they are configured to select said particular topology automatically or subject to user intervention, selecting the data referring to same.

10. The system according to claim 9, **characterized in that** said particular topology is a hypercube topology of n dimensions.

11. The system according to claim 8, 9 or 10, **characterized in that** said control means are configured to control said computation devices (T1-T5) so they can adapt the operation thereof to the implemented topology and/or to said multibroadcast.

12. The system according to any of claims 8 to 11, **characterized in that** at least part of the connections between computation devices (T1-T5) belonging to said communication means are configured to implement an additional function in addition to that of simple data transmission.

13. The system according to claim 12, **characterized in that** each of said connections configured to implement said additional function comprises an internal memory to temporarily store data to be transmitted to a computation device (T1-T5) under the control of said control means.

14. The system according to any of the preceding claims, **characterized in that** each of said computation devices (T1-T5) is a transputer.

15. The system according to any of the preceding claims, **characterized in that** all of said computation devices (T1-T5) have an identical internal architecture in at least most of the components thereof.

16. The system according to claim 15, **characterized in that** said processing unit (U1) is an arithmetic logic unit, ALU, and **in that** there are different ALU designs depending on the task to be executed for which the computation device (T1-T5) to which they belong is dedicated.

17. The system according to claim 15 or 16, **characterized in that** it is modular, each of said computation devices (T1-T5) being a module, and said control means being configured to select, automatically or subject to user intervention, the number and type of modules to be included in the system, as well as the connections between them, depending on the algorithm to be executed.

18. The system according to any of the preceding claims, **characterized in that** it is intended for performing real time data processing.

19. A computation device, of the type configured to process part of an algorithm in a concurrent and synchronized manner with other analogous computation devices, **characterized in that** it comprises synchronization means comprising a monitoring and unblocking unit (Ua) connected to the inputs (a, b) of said computation device (T1) and configured to compare data of said inputs (a, b) with data relating to a particular logic condition, and to generate an unblocking signal for the purpose of unblocking the previously blocked operation of at least one processing unit (U1) of the computation device (T1), depending on if there is a data match in said comparison.

20. The computation device according to claim 19, **characterized in that** it has the technical features of one of said computation devices (T1-T5) of the system proposed according to any of claims 1 to 18.
